# EUROPEAN PATENT SPECIFICATION

(11) **EP 3 038 951 B1**
(45) Date of publication and mention of the grant of the patent: **21.03.2018**
(21) Application number: 13755947.2
(22) Date of filing: 27.08.2013
(51) Int. Cl.: B65G 17/06, B65G 21/14

(54) **AN ITEM TRANSFER DEVICE AND A METHOD OF OPERATING THE ITEM TRANSFER DEVICE**
VORRICHTUNG ZUR ÜBERGABE EINES GEGENSTANDES UND VERFAHREN ZUM ANTREIBEN DIESER VORRICHTUNG
APPAREIL DE TRANSFERT D' UN ARTICLE AINSI QUE LE PROCÉDÉ POUR ACTIONNER CET APPAREIL DE TRANSFERT

(43) Date of publication of application: 06.07.2016
(73) Proprietor: BEUMER Group A/S, 8200 Aarhus N (DK)
(72) Inventor: FRANSEN, Dirk, NL-6121 RM Born (NL)
(74) Representative: Plougmann Vingtoft a/s
(86) International application number: PCT/DK2013/050274
(87) International publication number: WO 2015/028019

(56) References cited:
- EP-A1- 0 382 913
- DE-A1- 1 915 647
- FR-A1- 2 966 139
- GB-A- 2 147 866
- US-A- 2 793 736
- US-A- 3 780 843
- US-A1- 2003 029 694
- US-A1- 2005 155 846
- US-B2- 7 395 918

## Description

### TECHNICAL FIELD

The present invention relates to a device for transferring items between two points, according to the preamble of claim 1. In particular, the present invention relates to a device for transferring luggage into or out of a container from/to a conveyor belt located next to the container. The present invention also relates to a method of operating this device.

### BACKGROUND OF THE INVENTION

Transferring items, such as luggage, between a container and a conveyor belt is carried out regularly at airports, such as at airports servicing wide-body aircraft where luggage is stored in containers that are loaded onto the aircraft. This transferring of the luggage is typically done manually but recently alternative solutions have been proposed, see by way of example WO 2012/087192 which discloses a tool with which an operator can transfer luggage. Although this proposed tool improves working conditions to some extent there is still a need for an item transfer device that significantly reduces the risk of back injury.

US 3 780 043 (A) discloses an item transfer device according to the preamble of claim 1 and furthermore conveyors and more particularly a variable-length conveyor adapted to extend different distances as, for example, from a dock into a docked trailer so that articles being loaded into the trailer can be delivered at the output end of the conveyor at any point along the length of the trailer interior from the front to the rear as loading proceeds.

### OBJECT OF THE INVENTION

It is an object of the present invention to provide an improved device suitable for handling items to be transferred between a conveyor belt and a container, in particular but not exclusively to provide a device suitable for situations where an open loading/unloading end of the container is placed parallel or substantially parallel to the conveyor belt, such as at an airport.

### SUMMARY OF THE INVENTION

In its broadest form the item transfer device may be described as in appended claim 1. The invention also provides for a method of operating the item transfer device, according to the appended claim 12. The ability of the item transfer device to be extendable so as to reach different locations within a container, and this with a very simple construction, is highly beneficial.

In operation the inventive device is placed between the belt and the open end of the container. With the invention luggage stored within the container may be then reached by an end of the inventive device, at which end the luggage is loaded unto the device and from which end the luggage moves by gravity or by being pushed by an operator along the conveying structure to a second end of the device located at the conveyor belt.

The conveying structure includes rollers on the article supporting side, for facilitating relative movement of the items with respect to the frames between the two ends of the device. The conveying structure comprises individual lamellae pivotally linked to each other to allow for the aforementioned folding.

The first frame may include rounded end portions against which the fold at the folding of the conveying structure bears and moves on the pay out; the rounded end portions may be a sprocket engaging the conveying structure.

It is preferred that the item transfer device has in the first frame a compartment for safely storing a back-folded portion of the conveying structure, and rollers are preferably arranged at the ends of the device, in such a manner that they are engageable by items on loading/unloading thereof to/from the device, to ease the transfer of the items to/from the device. Preferably, the rollers are a part of the conveying structure.

It is preferred that the device includes a structure for supporting or suspending the first frame and located at the first device end, wherein the supporting or suspending structure is configured to allow for an operator controlled varying of the spatial position of the first frame and, hence, the direction in which items are moved. Locks are preferably arranged to lock the device in with given spatial orientation relative to the supporting structure. A handle may be arranged, such as on the second frame, for manually extracting the second frame from said first frame. Preferably, a lock is provided for releasably locking the second frame with respect to the first frame.

Preferably, the first end of the conveying structure is connected to the second frame at the second end of the device and, hence, spans the entire length of the device in the extended configuration.

### BRIEF DESCRIPTION OF THE FIGURES

The invention will now be described in more detail with regard to the accompanying figures. The figures show one way of implementing the present invention and is not to be construed as being limiting to other possible embodiments falling within the scope of the attached claim set.
Fig. 1 is a perspective view of a segment of a prior art conveyor belt,
Fig. 2a is a perspective view of a portion of a lamella suitable for making the conveyor belt of fig. 1,
Fig. 2b is a perspective view of the end of an embodiment of a conveying structure of an item transfer device of the present invention,
Figs. 3-5 are schematic views showing various configurations of an item transfer device of the present invention,
Fig. 6 is a perspective view of an item transfer device in the extended configuration shown in fig. 4, and
Fig. 7 is a perspective view of the item transfer device of fig. 6, shown without conveying structure thereof.

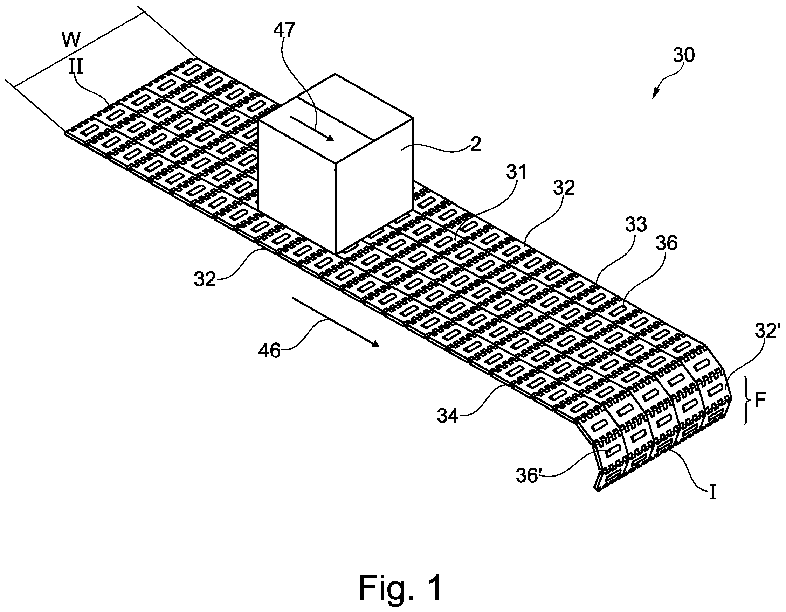

Fig. 1 shows a segment 30 of a prior art endless loop conveyor belt sold by Intralox and having a width W, such as in the order of 60-80 cm. Such an endless loop conveyor belt would generally be made up from a plurality of individual plastic lamellae 32 pivotally linked to each other by eyes 33 and would be driven in a direction as shown by arrow 46 by a sprocket engaging corresponding structures on an inwardly oriented side of the conveyor belt. An upwardly oriented article supporting side 31 defines a general level at and along which items 2 are conveyed.

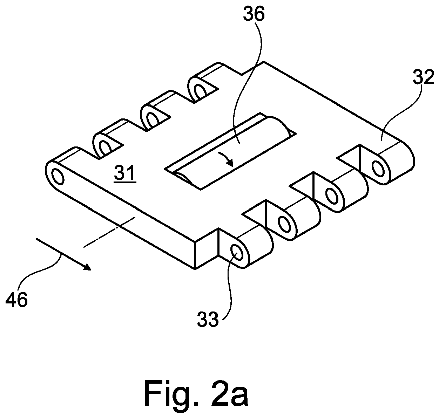

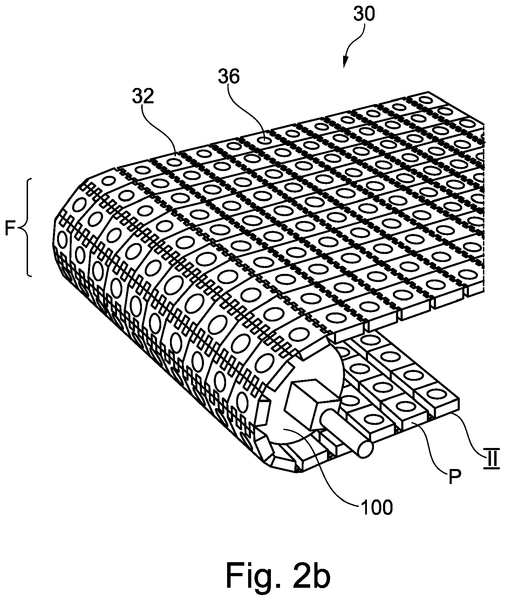

A segment 30 as shown in fig. 1 may conveniently be used for the purpose of the item transfer device of present invention, as discussed further below. Cylindrical or ball-shaped rollers 36 are mounted to each lamella 32, such as in the manner shown in figs. 2a and 2b, respectively, for supporting the item 2 on the article supporting side 31 and for facilitating a relative movement of the item 2 with respect to the lamellae 32, such as in the longitudinal direction 46. For the purpose of the present invention some or all of the rollers 36 are preferably configured for turning about a respective axis transverse to the length of the segment 30, as shown in figs. 1 and 2a. Generally, lamellae 32 of the type shown may be configured with a strength that is sufficient for the lamellae 32 to be supported along opposite ends 34 only, and for the segment 30 to be able to carry suitcases or similar items transported at an airport.

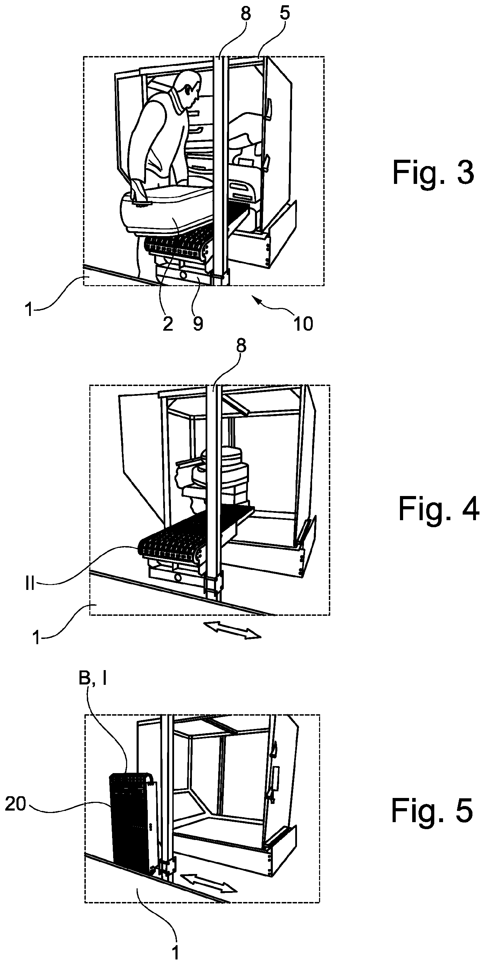

Figs. 3-5 show the present invention used at an airport in the process of unloading a standard container 5 of the general type used for wide-body aircraft, such as an Airbus 340. It will be understood that the present invention may also find use for loading such a container 5, and for any other process where items 2, such as suitcases, are transferred from one location to another. Normally the present invention can find use for transferring items 2 between a conveyor belt 1 and any storage compartment.

Specifically, fig. 3 shows the container 5 placed with its open end facing the longitudinal side of a conveyor belt 1 of a conveyor system configured to deliver luggage, such as suitcases, to a pick-up point in an airport arrivals section. The conveyor belt 1 runs past the open end of the container 5 in the directions of the arrow shown in fig. 4, and may be configured to alternatively deliver luggage from an airport check-in area to the container 5.

In operation of the present invention, items 2, such as suitcases, stacked in the container 5 are normally pulled manually out from a stack of suitcases in the container 5 by an operator and transferred to the conveyor belt 1 using the present item transfer device. The item transfer device, identified generally by numeral 10, is placed between the conveyor belt 1 and the container 5 and is preferably supported by an arm 9 connected to a column 8. The column 8 may be suspended from an overhead structure (not shown) or may rest on the building floor, preferably in a manner allowing the item transfer device 10 to be moved along the length of the conveyor belt 1 in the direction shown by the arrow in fig. 5, to be locked in a position aligned with any container 5.

In addition, the item transfer device 10 may be configured to be vertically adjustable to be lockable in desired position along the height of the column 8, and means may be provided for turning the item transfer device 10 to a desired inclined position about a horizontal axis, and for locking in that position, during the unloading or loading procedure, or even to a fully upright position, as shown in fig. 5. The device 10 may also be configured such that the arm 9 supporting the device 10 may turn about a vertical axis; normally, however, the device 10 will operate to move items 2 in a direction substantially perpendicular to the adjacent conveyor belt 1.

Shown in fig. 3 is the item transfer device 10 in a first, short length configuration convenient for receiving suitcases 2 stacked near the container 5 opening at the up-start of an unloading process. Fig. 4 shows the device 10 in a second, extended or longer configuration convenient for transferring suitcases 2 stacked deeper inside the container 5 to the conveyor belt 1. Fig. 5 shows again the device 10 in the first, short length configuration, this time turned into the upright space saving storage position mentioned above.

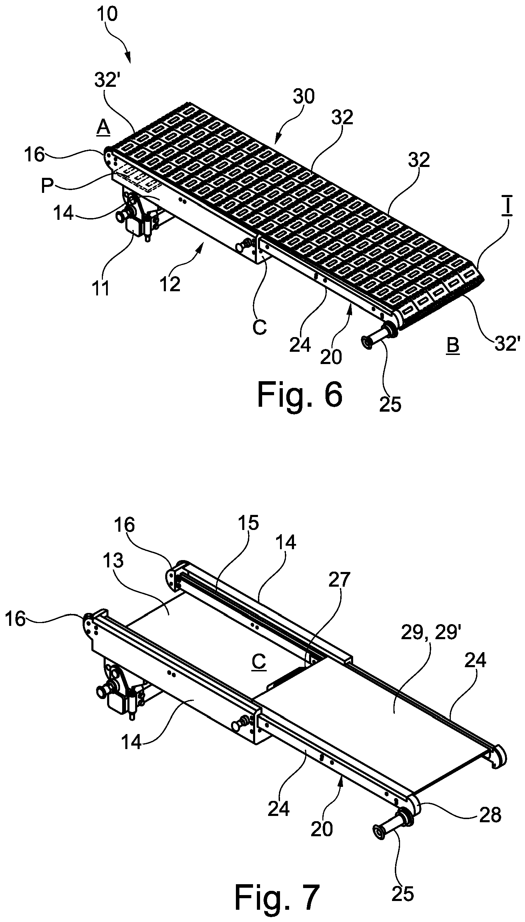

Fig. 6 shows an embodiment of the item transfer device 10 in more details. The device 10 comprises a first frame 12 with opposite sides 14 of which only one is visible in fig. 6. A second frame 20 with opposite sides 24 is slidably supported by the first frame 12, such as by ribs on the sides 24 mounted to telescopically extendable tracks or rails secured to each of the sides 14, and may be pulled out from the first frame 12 to define the aforementioned second, extended or longer configuration of the device 10 shown in figs. 4 and 6. A lock (not shown) may be provided to lock the second frame 20 in any given extended position with respect to the first frame 12.

It will be understood that the device 10 has a first end A identified in fig. 6, near or at which the first frame 12 is mounted to the column 8 via the arm 9 and which during operation of the device 10 as shown in figs. 3 and 4 is located proximal to the conveyor belt 1. An opposite second end B of the device 10 is defined by an extremity of the second frame 20 and may be positioned as desired within the container 1, as shown in fig. 4, by manually or otherwise moving the second frame 20 relative to the first frame 12, to an extended or extracted position in relation to the first frame 12.

Shown also in fig. 6 is a conveying structure formed by the segment 30 shown in fig. 1 and which is arranged to be doubled or folded on itself to variable degrees in operation of the device 10, made possible through the lamellae 32 being pivotally interconnected. Such a conveying structure 30 generally having linked rigid lamellae 32 abutting closely against each other to prevent luggage from getting caught between the lamellae 32 and having rollers 36 allowing the operator to easily move the items 2 between the ends A, B, such as by gravity, is preferred. Other foldable structures allowing a relative movement of items 2 supported thereon, such as chains with rollers or low-friction belts, may also be used according to the invention, but are presently less preferred. As will be seen, the distance between the respective opposite sides 14, 24 of the two frames 12, 20 corresponds essentially to the width W of the segment 30.

As seen in fig. 6, one end I of the conveying structure or segment 30 is anchored or fixed to the second end B of the device 10, and preferably folded back by a short distance. Thereby, on unloading the container 5 shown in figs. 3 and 4 the operator may conveniently shift an item 2 within the container 5 to a position against the second end B, more particularly against rollers 36' of those lamellae 32' that stand more or less upright and face the opening of the container 5, see also fig. 1. The rollers 36' thereby guide the item 2 up to the general level of the upwardly oriented item supporting side 31 (see fig. 1). When the device 10 is used for loading items 2 into the container 5 the items 2 conveniently slides down the upright lamellae 32' whenever there is a difference in height between a support level within the container 5 and the aforementioned level defined by the article supporting side 31 of the segment 30.

As shown in fig. 2b, in the shown embodiment the other, second end II of the conveying structure 30 is also folded back at fold F, to form a back-folded portion P of the conveying structure 30. This more or less horizontally back-folded portion P is adapted to be retracted into a lower compartment C which may be closed and which is defined in part by the first frame 12. The back-folded portion P is also shown by broken lines in fig. 6, the degree of retraction of the conveying structure 10 into the compartment C depending on the degree to which the second frame 20 is extended from the first frame 12. To support the back-folded portion P the compartment C preferably has suitable guideways which may be arranged on the inside of the opposite sides 14, as well as rounded end portions 16 of the sides 14, against which the upright lamellae 32' at the fold F bear and move. As shown in fig. 2b the rounded end portions 16 may comprise or be constituted by a turning sprocket 100 engaging an inwardly oriented side of the conveying structure 30 and turnable either way.

In use, an operator may change the configuration of the device 10 between the short and longer configuration by pushing or pulling the second frame 20 to thereby increase or decrease the length of the back-folded portion P in the compartment C. While the part of the conveying structure 30 visible in fig. 6 is generally slidably supported by the first frame 12, such as by the sides 14, it may be preferred to receive the opposite edges defined by the opposite lamella ends 34 of the conveying structure 30, or other portions thereof, in dedicated guideways, such as in inward guideways arranged on the sides 14, 24, to not only restrict sideways movement of the conveying structure 30 in relation to the frames 12, 20 but also to hold down the conveying structure 30 in a controlled manner against the frames 12, 20. This is especially to prevent buckling where retraction of a portion P of the conveying structure 30 into the compartment C follows by the operator pushing the second frame 20 towards the first frame 12 using handle 25, thereby forcing the lamellae 32 supported by the first frame 12 to slide along the first frame 12. Where alternatively this retraction follows by an operator-activated rotation of the sprocket 100 shown in fig. 2b or by a pull being applied directly onto the end II of the conveying structure 30 from the inside of the compartment C, such as through a motor or a spring being wound up as the second frame 20 is pulled out of the first frame 12 by the operator, this may not be necessary.

Fig. 7 is a view similar to fig. 6, but with the conveying structure 30 removed to show the compartment C, which in this embodiment is downwardly closed by a bottom plate 13 which is part of the first frame 12. One or more wheels (not shown) may be provided on the bottom plate 13 near the end thereof distal to the portion 16, to additionally support the second frame 20. As shown, the second frame 20 may include a plate 29 connecting the opposite sides 24 and on which a part of the conveying structure 30 may rest without stopping movement of the rollers 36, and the sides 24 have rounded end portions 28 similar to the rounded end portions 16 and supporting the aforementioned fold F at the second end B.

Although preferred to simplify the construction, the conveying structure part above the second frame 20 does not need to be comprised by lamellae 32 of the segment 30 that are physically linked together as described above. The conveying structure shown generally in fig. 1 may alternatively be connected at its one end I to a rear end 27 of a conveying surface 29' formed by the plate 29 as such, by providing the plate 29 with rollers distributed across its surface to carry items 2 from the second end B over to the foldable conveying structure 30 at a transition point at rear end 27. To avoid any such transition point it is, however, preferred to use between the two ends A, B of the device 10 a single coherent conveying structure, such as the segment 30 shown in fig. 1.

It is noted that while in the preferred embodiment the compartment C is located in the first frame 12 it may alternatively be located in the second frame 20, in which case the segment 30 discussed above would be fixed to the first frame 12, preferably with a rounded portion at end A with upright lamellae 32'. Generally, an exposed rounded portion, i.e. the fold F, of the conveying structure 30 at the end A of the device 10 provides the same general advantages mentioned above in terms of facilitating guiding of items 2 to and from the device 10. It is also noted that while the embodiment discussed above includes only one frame extendable or extractable from the first frame 12 several additional telescopically mounted frames may be incorporated, in which case the conveying structure 30 may be configured to be doubled on itself several times within a compartment C, using appropriate guideways arranged therein. While the rollers 36, 36' referred to above are idle rollers it is clear that the invention will also be workable with conveyor segments 30 having driven rollers 36; the plate 29 may have means for driving the rollers 36.

## Claims

1. An item transfer device (10) having a first end (A) and a second end (B) and including a first frame (12) defining said first end (A) and a second frame (20) defining said second end (B), said second frame (20) being extractable or extendable from said first frame (12) to increase the distance between said first end (A) and said second end (B), said device (10) further including an elongated conveying structure (30) having a width (W) and being configured to be foldable on itself, said conveying structure (30) having an item supporting side (31) configured for supporting items (2) transferred between said two ends (A, B), said conveying structure (30) having a first end (I) and a second end (II) and being slidable in relation to said first frame (12), said first end (I) of said conveying structure (30) being connected to said second frame (20) and said first frame (12) being configured to receive said second end (II) of said conveying structure (30) and to store a back-folded portion (P) of said conveying structure (30) below said item supporting side (31) at said first end (A) and to pay out said back-folded portion (P) of said conveying structure (30) stored by said first frame (12) on said second frame (20) being extracted or extended from said first frame (12), said conveying structure (30) including rollers (36) on said item supporting side (31), for facilitating a relative movement of said items (2) with respect to said frames (12, 20), **characterized in that** said conveying structure (30) comprises individual rigid lamellae (32) pivotally linked to each other to allow for said folding on itself, with the roller(s) (36) mounted to each individual lamella, and driven by a sprocket (100) engaging corresponding structures on an inwardly oriented side of the conveying structure (30).

2. The item transfer device according to claim 1, said first frame (12) including rounded end portions (16) against which a fold (F) of said conveying structure (30) bears and moves on said pay out.

3. The item transfer device according to any of the preceding claims, said first frame (12) including at said first end (A) a sprocket (100) engaging said conveying structure (30).

4. The item transfer device according to any of the preceding claims, said first frame (12) including a compartment (C) for said storing.

5. The item transfer device according to any of the preceding claims, including rollers (36') at at least one of said ends (A, B), said rollers being exposed so as to be engageable by said items (2).

6. The item transfer device according to the preceding claim, said rollers (36') at said ends (A, B) being part of said conveying structure (30).

7. The item transfer device according to the preceding claim, said rollers (36') at said first end (A) and/or at said second end (B) being exposed so as to be engageable by said items (2).

8. The item transfer device according to any of the preceding claims, including a structure (8) for supporting or suspending said first frame (12) and being located at said first end (A), said structure (8) being configured for varying the position of said first frame (12).

9. The item transfer device according to the preceding claim, said structure (8) being configured for pivotal movement of said first frame (12) about an essentially horizontal axis.

10. The item transfer device according to any of the preceding claims, including a handle (25) on said second frame (20), for manually extracting said second frame (20) from said first frame (12), and/or a lock for releasably locking said second frame (20) with respect to said first frame (12).

11. The item transfer device according to any of the preceding claims, said first end (I) of said conveying structure (30) being connected to said second frame (20) at said second end (B).

12. A method of operating the item transfer device according to any of the preceding claims, for transferring items (2) between a container (5) and a moving conveyor (1), comprising the steps of i) placing said container (5) with an opening thereof facing said conveyor (1), ii) placing said device (10) between said conveyor (1) and said opening, with said first end (A) thereof at said conveyor (1) and said second end (B) thereof at said opening, iii) extending or extracting said second frame (20) from said first frame (12) as necessary to reach a location within said container (5) with said second end (B), iv) placing items (2) to be transferred on said conveying structure (30), and v) moving said items (2) along said conveying structure between said first end (A) and said second end (B).

13. The method of the preceding claim, where the device includes rollers (36') at at least one of said ends (A, B), wherein said step iv) includes a substep of engaging said rollers (36') by said items (2).

## Patentansprüche

1. Vorrichtung zur Übergabe eines Gegenstands (10) mit einem ersten Ende (A) und einem zweiten Ende (B) und beinhaltend einen ersten Rahmen (12), der das erste Ende (A) definiert, und einen zweiten Rahmen (20), der das zweite Ende (B) definiert, wobei der zweite Rahmen (20) aus dem ersten Rahmen (12) ausziehbar oder ausfahrbar ist, um den Abstand zwischen dem ersten Ende (A) und dem zweiten Ende (B) zu erhöhen, die Vorrichtung (10) ferner beinhaltend eine verlängerte Förderstruktur (30) mit einer Breite (W) und dazu konfiguriert, in sich selbst faltbar zu sein, wobei die Förderstruktur (30) eine Gegenstand-stützende Seite (31) aufweist, die zum Stützen von Gegenständen (2) konfiguriert ist, die zwischen den zwei Enden (A, B) übertragen werden, wobei die Förderstruktur (30) ein erstes Ende (I) und ein zweites Ende (II) aufweist und in Bezug auf den ersten Rahmen (12) verschiebbar ist, wobei das erste Ende (I) der Förderstruktur (30) mit dem zweiten Rahmen (20) verbunden ist und der erste Rahmen (12) dazu konfiguriert ist, das zweite Ende (II) der Förderstruktur (30) zu empfangen und einen zurückgefalteten Teil (P) der Förderstruktur (30) unter der Gegenstand-stützenden Seite (31) an dem ersten Ende (A) aufzunehmen und den zurückgefalteten Teil (P) der Förderstruktur (30), die durch den ersten Rahmen (12) an dem zweiten Rahmen (20), der aus dem ersten Rahmen (12) ausgezogen oder ausgefahren ist, aufgenommen ist, auszugeben, wobei die Förderstruktur (30) Rollen (36) an der Gegenstand-stützenden Seite (31) beinhaltet, um eine relative Bewegung der Gegenstände (2) in Bezug auf die Rahmen (12, 20) zu ermöglichen, **dadurch gekennzeichnet, dass** die Förderstruktur (30) einzelne feste Lamellen (32) umfasst, die schwenkbar miteinander verknüpft sind, um das Falten in sich selbst zu ermöglichen, wobei die Rolle(n) (36) an jeder einzelnen Lamelle befestigt ist/sind und durch ein Zahnrad (100) angetrieben ist/sind, das in entsprechende Strukturen an einer nach innen gerichteten Seite der Förderstruktur (30) eingreift.

2. Vorrichtung zur Übergabe eines Gegenstands nach Anspruch 1, wobei der erste Rahmen (12) abgerundete Endteile (16) beinhaltet, an die eine Falte (F) der Förderstruktur (30) während besagte Ausgeben anliegt und bewegt.

3. Vorrichtung zur Übergabe eines Gegenstands nach einem der vorstehenden Ansprüche, wobei der erste Rahmen (12) an dem ersten Ende (A) ein Zahnrad (100) beinhaltet, das in die Förderstruktur (30) eingreift.

4. Vorrichtung zur Übergabe eines Gegenstands nach einem der vorstehenden Ansprüche, wobei der erste Rahmen (12) ein Fach (C) für das Aufnehmen beinhaltet.

5. Vorrichtung zur Übergabe eines Gegenstands nach einem der vorstehenden Ansprüche, beinhaltend Rollen (36') an zumindest einem der Enden (A, B), wobei die Rollen so exponiert sind, dass in sie durch die Gegenstände (2) eingegriffen werden kann.

6. Vorrichtung zur Übergabe eines Gegenstands nach dem vorstehenden Anspruch, wobei die Rollen (36') an den Enden (A, B) ein Teil der Förderstruktur (30) sind.

7. Vorrichtung zur Übergabe eines Gegenstands nach dem vorstehenden Anspruch, wobei die Rollen (36') an dem ersten Ende (A) und/oder an dem zweiten Ende (B) so exponiert sind, dass in sie durch die Gegenstände (2) eingegriffen werden kann.

8. Vorrichtung zur Übergabe eines Gegenstands nach einem der vorstehenden Ansprüche, beinhaltend eine Struktur (8) zum Stützen oder Halten des ersten Rahmens (12), die sich an dem ersten Ende (A) befindet, wobei die Struktur (8) dazu konfiguriert ist, die Position des ersten Rahmens (12) zu variieren.

9. Vorrichtung zur Übergabe eines Gegenstands nach dem vorstehenden Anspruch, wobei die Struktur (8) für eine Schwenkbewegung des ersten Rahmens (12) um eine im Wesentlichen horizontale Achse konfiguriert ist.

10. Vorrichtung zur Übergabe eines Gegenstands nach einem der vorstehenden Ansprüche, beinhaltend einen Griff (25) an dem zweiten Rahmen (20) zum manuellen Ausziehen des zweiten Rahmens (20) aus dem ersten Rahmen (12) und/oder eine Verriegelung zum lösbaren Verriegeln des zweiten Rahmens (20) in Bezug auf den ersten Rahmen (12).

11. Vorrichtung zur Übergabe eines Gegenstands nach einem der vorstehenden Ansprüche, wobei das erste Ende (I) der Förderstruktur (30) mit dem zweiten Rahmen (20) an dem zweiten Ende (B) verbunden ist.

12. Verfahren zum Antreiben der Vorrichtung zur Übergabe eines Gegenstands nach einem der vorstehenden Ansprüche zum Übergeben von Gegenständen (2) zwischen einem Behälter (5) und einem sich bewegenden Förderer (1), umfassend die folgenden Schritte: i) Platzieren des Behälters (5), wobei eine Öffnung davon zu dem Förderer (1) zeigt, ii) Platzieren der Vorrichtung (10) zwischen dem Förderer (1) und der Öffnung, mit dem ersten Ende (A) davon an dem Förderer (1) und dem zweiten Ende (B) davon an der Öffnung, iii) Ausziehen oder Ausfahren des zweiten Rahmens (20) aus dem ersten Rahmen (12), so wie erforderlich, um eine Stelle innerhalb des Behälters (5) mit dem zweiten Ende (B) zu erreichen, iv) Platzieren von Gegenständen (2), die auf der Förderstruktur (30) zu übergeben sind, und v) Bewegen der Gegenstände (2) entlang der Förderstruktur zwischen dem ersten Ende (A) und dem zweiten Ende (B).

13. Verfahren nach dem vorstehenden Anspruch, wobei die Vorrichtung Rollen (36') an zumindest einem der Enden (A, B) beinhaltet, wobei der Schritt iv) einen Unterschritt des Eingreifens in die Rollen (36') durch die Gegenstände (2) beinhaltet.

## Revendications

1. Dispositif (10) de transfert d'articles comportant une première extrémité (A) et une seconde extrémité (B) et comprenant un premier bâti (12) définissant ladite première extrémité (A) et un second bâti (20) définissant ladite seconde extrémité (B), ledit second bâti (20) pouvant être extrait ou déployé dudit premier bâti (12) de façon à augmenter la distance séparant ladite première extrémité (A) de ladite seconde extrémité (B), ledit dispositif (10) comprenant en outre une structure de transport allongée (30) ayant une largeur (W) et étant conçue pour être repliée, ladite structure de transport (30) comportant un côté (31) de support d'articles conçu pour supporter des articles (2) transférés entre lesdites deux extrémités (A, B), ladite structure de transport (30) comportant une première extrémité (I) et une seconde extrémité (II) et pouvant coulisser par rapport audit premier bâti (12), ladite première extrémité (I) de ladite structure de transport (30) étant reliée audit second bâti (20) et ledit premier bâti (12) étant conçu pour recevoir ladite seconde extrémité (II) de ladite structure de transport (30) et pour ranger une partie repliée (P) de ladite structure de transport (30) sous ledit côté (31) de support d'articles au niveau de ladite première extrémité (A) et pour déplier ladite partie repliée (P) de ladite structure de transport (30) rangée dans ledit premier bâti (12) sur ledit second bâti (20) dans un état extrait ou déployé dudit premier bâti (12), ladite structure de transport (30) comprenant des rouleaux (36) situés dudit côté (31) de support d'articles, destinés à faciliter un déplacement relatif desdits articles (2) par rapport auxdits bâtis (12, 20), **caractérisé en ce que** ladite structure de transport (30) comprend des lamelles rigides individuelles (32) liées les unes aux autres de manière pivotante de façon à permettre ledit repliement, le ou les rouleaux (36) étant montés sur chaque lamelle individuelle et étant entraînés par un tambour denté (100) engrenant avec des structures correspondantes situées d'un côté orienté vers l'intérieur de la structure de transport (30).

2. Dispositif de transfert d'articles selon la revendication 1, dans lequel ledit premier bâti (12) comprend des parties d'extrémité arrondies (16) contre lesquelles appuie se déplace un pli (F) de ladite structure de transport (30) lorsque cette dernière est dépliée.

3. Dispositif de transfert d'articles selon l'une quelconque des revendications précédentes, dans lequel ledit premier bâti (12) comprend à ladite première extrémité (A), un tambour denté (100) engrenant avec ladite structure de transport (30).

4. Dispositif de transfert d'articles selon l'une quelconque des revendications précédentes, dans lequel ledit premier bâti (12) comprend un compartiment (C) destiné audit rangement.

5. Dispositif de transfert d'articles selon l'une quelconque des revendications précédentes, comprenant des rouleaux (36') au niveau d'au moins une desdites extrémités (A, B), lesdits rouleaux étant exposés de sorte que lesdits articles (2) puissent coopérer avec ces derniers.

6. Dispositif de transfert d'articles selon la revendication précédente, dans lequel lesdits rouleaux (36') situés au niveau desdites extrémités (A, B) font partie de ladite structure de transport (30).

7. Dispositif de transfert d'articles selon la revendication précédente, dans lequel lesdits rouleaux (36') situés au niveau de ladite première extrémité (A) et/ou au niveau de ladite seconde extrémité (B) sont exposés de sorte que lesdits articles (2) puissent coopérer avec ces derniers.

8. Dispositif de transfert d'articles selon l'une quelconque des revendications précédentes, comprenant une structure (8) destinée à supporter ou à suspendre ledit premier bâti (12) et située au niveau de ladite première extrémité (A), ladite structure (8) étant conçue pour varier la position dudit premier bâti (12).

9. Dispositif de transfert d'articles selon la revendication précédente, dans lequel ladite structure (8) est conçue pour un mouvement pivotant dudit premier bâti (12) autour d'un axe sensiblement horizontal.

10. Dispositif de transfert d'articles selon l'une quelconque des revendications précédentes, comprenant une poignée (25) située sur ledit second bâti (20), destinée à extraire manuellement ledit second bâti (20) dudit premier bâti (12), et/ou un verrou destiné à verrouiller de manière libérable ledit second bâti (20) par rapport audit premier bâti (12).

11. Dispositif de transfert d'articles selon l'une quelconque des revendications précédentes, dans lequel ladite première extrémité (I) de ladite structure de transport (30) est reliée audit second bâti (20) au niveau de ladite seconde extrémité (B).

12. Procédé de mise en oeuvre du dispositif de transfert d'articles selon l'une quelconque des revendications précédentes, permettant de transférer des articles (2) entre un conteneur (5) et un convoyeur mobile (1), comprenant les étapes consistant à i) placer ledit conteneur (5) de sorte que son ouverture fasse face audit convoyeur (1), ii) placer ledit dispositif (10) entre ledit convoyeur (1) et ladite ouverture, ladite première extrémité (A) de ce dernier se trouvant au niveau dudit convoyeur (1) et ladite seconde extrémité (B) de ce dernier se trouvant au niveau de ladite ouverture, iii) déployer ou extraire ledit second bâti (20) dudit premier bâti (12) comme nécessaire de sorte que ladite seconde extrémité (B) atteigne une certaine position à l'intérieur dudit conteneur (5), iv) placer des articles (2) à transférer sur ladite structure de transport (30), et v) déplacer lesdits articles (2) le long de ladite structure de transport entre ladite première extrémité (A) et ladite seconde extrémité (B).

13. Procédé selon la revendication précédente, dans lequel le dispositif comprend des rouleaux (36') situés au niveau d'au moins l'une desdites extrémités (A, B), dans lequel ladite étape iv) comprend une sous-étape consistant à mettre en coopération lesdits rouleaux (36') et lesdits articles (2).
